# EUROPEAN PATENT SPECIFICATION

(11) **EP 2 108 779 B1**
(45) Date of publication and mention of the grant of the patent: **18.10.2017**
(21) Application number: 09157379.0
(22) Date of filing: 06.04.2009
(51) Int. Cl.: E21B 7/00

(54) **Crank for an ice drill and ice drill comprising such a crank**
Kurbel für einen Eisbohrer und Eisbohrer mit solch einer Kurbel
Levier pour trépan de forage dans la glace et trépan de forage dans la glace doté dudit levier

(30) Priority: 09.04.2008 SE 0800790
(43) Date of publication of application: 14.10.2009
(73) Proprietor: KL-TEHO OY, FI-41800 Korpilahti (FI)
(72) Inventor: Sjöberg, Lars, 792 75 Färnäs (SE)
(74) Representative: Kolster Oy Ab

(56) References cited:
- US-A- 4 947 943

## Description

### FIELD OF THE INVENTION AND PRIOR ART

The present invention relates to a crank for an ice drill according to the preamble of claim 1. The invention also relates to an ice drill according to the preamble of claim 15.

In this description and the subsequent claims, the expression "ice drill" refers to a tool for drilling a hole through outdoor ice on different types of pooles of water and water courses, such as for instance lakes, seas, streams, rivers, etc. Such an ice drill is normally used in order to make a hole through an outdoor ice for fishing, such as jig fishing, but can also be used in order to make a hole in an ice for another purpose. Ice drills of the type here in question may be designed to make holes with varying diameters, normally in the size of about 20 cm.

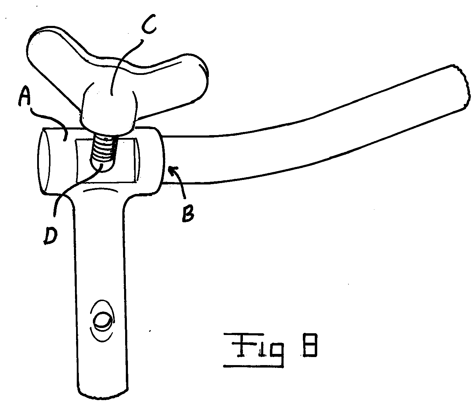

An ice drill can be provided with a crank designed to be rotated by hand for manual drilling of a hole in an ice. Such a crank comprises a crank rod, which is connected to a drill rod of the ice drill. In order to make the ice drill less bulky during transport and storage, it is known to provide the crank rod with a coupling device which is arranged to pivotally connect an upper crank rod part to a lower crank rod part so as to allow the upper crank rod part to be pivoted in relation to the lower crank rod part through the coupling device between an unfolded use position and a folded transport and storage position. Such a coupling device of known type is illustrated in Fig 8. This known coupling device comprises a sleeve-shaped first coupling part A, which is fixedly connected to the lower crank rod part and arranged with its longitudinal axis perpendicularly to the longitudinal axis of the lower crank rod part, and a second coupling part B, which is fixedly connected to the upper crank rod part and rotatably received in the first coupling part A. The coupling parts A, B are fixable in relation to each other by means of a screw member C provided with a twist grip, which screw member extends through a transverse groove D in the first coupling part and is in engagement in a threaded hole in the second coupling part B. By tightening the screw member C, the two coupling parts A, B may be fixed in a desired pivotal position in relation to each other. With this known solution, there is a risk that mutual wear between the coupling parts and the screw member will cause too much play in the coupling device in the course of time. Such play can cause vibrations in the crank when drilling in ice, which may be inconvenient to the user and cause an impaired drilling result. With this known type of coupling device, it may also be difficult to tighten the screw member with a suitable force.

### OBJECT OF THE INVENTION

The object of the present invention is to achieve an improved connection between an upper crank rod part and a lower crank rod part in a crank for an ice drill, so that there are good possibilities for a play-free connection between said crank rod parts at the same time as the upper crank rod part when needed may be folded down in relation to the lower crank rod part.

### SUMMARY OF THE INVENTION

According to the present invention, said object is achieved by means of a crank having the features defined in claim 1.

The crank according to the invention comprises a crank rod with an upper crank rod part and a lower crank rod part, and a coupling device, which is arranged to pivotally connect the upper crank rod part to the lower crank rod part so as to allow the upper crank rod part to be pivoted in relation to the lower crank rod part through the coupling device between an unfolded use position and a folded transport and storage position, the coupling device comprising:
- a sleeve-shaped first coupling part, which is fixedly connected to the lower crank rod part and arranged with its longitudinal axis perpendicularly or at least essentially perpendicularly to the longitudinal axis of the lower crank rod part;
- a second coupling part, which is fixedly connected to the upper crank rod part and rotatably received in the first coupling part;
- a blocking member attached to the second coupling part and protruding radially therefrom, which blocking member is arranged to accompany the second coupling part during rotation and axial displacement thereof, this blocking member being arranged to be received in a groove in a first end of the first coupling part when the upper crank rod part is in said unfolded use position; and
- a locking mechanism, which by means of a manoeuvring member is manoeuvrable from an unlocked position to a locking position and vice versa when the upper crank rod part is in the unfolded use position with said blocking member received in said groove, the locking mechanism being arranged to prevent, in its locking position, mutual axial displacement between the second coupling part and the first coupling part so that the blocking member thereby will be retained in said groove while preventing mutual rotation between said coupling parts and to allow, in its unlocked position, mutual axial displacement between the second coupling part and the first coupling part so that the blocking member thereby is allowed to leave said groove while allowing mutual rotation between said coupling parts.

By co-operation between the blocking member attached to the second coupling part and the associated groove in the first coupling part, a well-defined and stable mutual position between the two coupling parts is achieved when the upper crank rod part is in the unfolded use position.

According to a favourable embodiment of the invention:
- the first coupling part is provided with an outwardly facing guiding cam at its end facing away from the blocking member;
- the locking mechanism comprises a locking member connected to the manoeuvring member in a rotationally rigid manner, which locking member is pivotable in relation to the first coupling part and arranged to abut against said guiding cam;
- the locking member is arranged to assume a first pivotal position in relation to the first coupling part when the locking mechanism is in the unlocked position and a second pivotal position in relation to the first coupling part when the locking mechanism is in the locking position, the locking member being pivotable by means of the manoeuvring member to and fro between said first and second pivotal positions and being arranged to be displaced in axial direction outwards in relation to the first coupling part under the effect of said guiding cam when pivoting from said first pivotal position to said second pivotal position; and
- the locking member is connected to the second coupling part through a connecting element extending between the locking member and the second coupling part in such a manner that the second coupling part is axially displaceable in relation to the first coupling part when the locking member is in the first pivotal position and prevented from being displaced axially in relation to the first coupling part when the locking member is in the second pivotal position.
Hereby, it will in a simple manner be possible to control the possibility of mutual axial displacement between the two coupling parts and thereby the possibility of mutual rotation between the two coupling parts.

According to another embodiment of the invention:
- the connecting element is axially displaceable in relation to the locking member and fixed in axial position in relation to the second coupling part; and
- a spring member is arranged between a shoulder of the locking member and a shoulder of the connecting element, the connecting element being axially displaceable inwards together with the second coupling part against the action of this spring member when the locking member is in the first pivotal position. Hereby, the blocking member fixed to the second coupling part will consequently be displaceable out of the groove in the first coupling part against the action of the spring member, and the spring member will consequently ensure that a force of a given magnitude is required in order to achieve a manoeuvring of the upper crank rod part from the unfolded use position to the folded transport and storage position. The spring member will at the same time ensure that the blocking member is pulled into the groove in the first coupling part when the upper crank rod part is pivoted to the unfolded use position.

Other favourable features of the crank according to the invention will appear from the dependent claims and the following description.

The invention also relates to an ice drill having the features defined in claim 15.

Other favourable features of the ice drill according to the invention will appear from the following description.

### BRIEF DESCRIPTION OF THE DRAWINGS

The invention will in the following be more closely described by means of embodiment examples, with reference to the appended drawings. It is shown in:
- Fig 1a: a lateral view of an ice drill with a crank according to an embodiment of the present invention, with an upper crank rod part shown in an unfolded use position,
- Fig 1b: the ice drill of Fig 1a with the upper crank rod part shown in a folded transport and storage position,
- Fig 2: a perspective view of the crank of the ice drill according to Figs 1a and 1b,
- Fig 3: a partly cut lateral view of a coupling device included in the crank of Fig 2, with the locking mechanism of the coupling device shown in its locking position,
- Fig 4: a partly cut planar view from above of the coupling device of Fig 3, with the locking mechanism of the coupling device shown in its locking position,
- Fig 5: a partly cut lateral view corresponding to the lateral view of Fig 3, but with the locking mechanism of the coupling device shown in its unlocked position,
- Fig 6: a partly cut lateral view corresponding to the lateral view of Fig 5, but with the upper crank rod part pivoted in relation to the lower crank rod part,
- Fig 7: an exploded perspective view of parts included in the coupling device of Figs 3-6, and
- Fig 8: a perspective view of a coupling device of a previously known design in a crank for an ice drill.

### DETAILED DESCRIPTION OF PREFERRED EMBODIMENTS

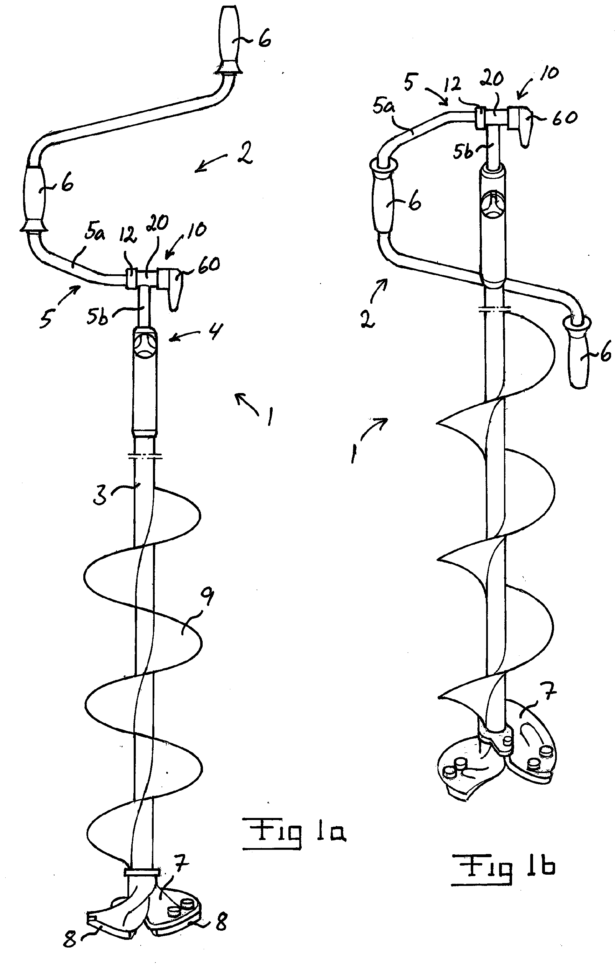

Fig 1 illustrates an ice drill 1 with a crank 2 according to an embodiment of the present invention. This ice drill 1 is provided with a central, rigid drill rod 3, which for instance is made of stainless steel or surface treated steel. A crank 2 is removably secured to the upper end of the drill rod 3 through a coupling arrangement 4. The crank 2 comprises a crank rod 5, which is secured to the drill rod 3 through said coupling arrangement 4. The crank 2 is provided with a handle 6, and by rotating the crank by manual power, the drill rod 3 can be driven to rotate about its own axis in order to drill in ice. A bore crown 7 is arranged at the lower end of the drill rod 3. The bore crown 7 is arranged to rotate together with the drill rod 3 and is consequently connected thereto in a rotationally rigid manner. One or more cutting blades 8 are attached to the bore crown 7, the respective cutting blade 8 having a cutting edge extending essentially radially in relation to the drill rod 3 for cutting and thereby drilling in ice during rotation of the bore crown 7. The ice drill is suitably provided with two such cutting blades 8 arranged with a spacing of 180° about the drill rod. A spiral 9 extends about the drill rod 3 from the area of the bore crown 7 and upwards for lifting crushed ice formed during drilling.

The crank rod 5 has an upper crank rod part 5a and a lower crank rod part 5b, which is pivotally connected to the upper crank rod part 5a through a coupling device 10. The coupling device 10 is arranged to allow the upper crank rod part 5a to be pivoted in relation to the lower crank rod part 5a between an unfolded use position (see Fig 1a) and a folded transport and storage position (see Fig 1b). When the upper crank rod part 5a is in the unfolded use position illustrated in Fig 1a, the ice drill 1 is ready for drilling by rotation of the crank 2. In the folded position illustrated in Fig 1b, the upper crank rod part 5a is folded down against the drill rod 3 so as to reduce the length of the ice drill and thereby facilitate transport and storage thereof.

In the illustrated example, the lower crank rod part 5b is removably secured to the upper end of the drill rod 3 through the above-mentioned coupling arrangement 4. The lower crank rod part could however alternatively be rigidly connected to the drill rod. In the last-mentioned case, the lower crank rod part could be integrated with the upper part of the drill rod and consequently formed by an upper prolongation of the drill rod.

The coupling device 10 comprises a sleeve-shaped first coupling part 20, which is rigidly connected to the lower crank rod part 5b and arranged with its longitudinal axis perpendicularly or at least essentially perpendicularly to the longitudinal axis of the lower crank rod part. A second coupling part 30 is rigidly connected to the upper crank rod part 5a and rotatably received in the first coupling part 20. The second coupling part 30 is tubular in the illustrated example. The second coupling part 30 may be integrated with the lower end of the upper crank rod part 5a and consequently formed by an end section of the upper crank rod part 5a. The second coupling part 30 is received in a cavity 21 in the first coupling part 20 and has a circularly cylindrical mantle surface 31 which slidably abuts against a circularly cylindrical internal wall surface 22 of said cavity 21. The second coupling part 30 is rotatably and axially displaceably mounted inside the first coupling part 20.

The coupling device 10 further comprises a locking mechanism 40, which is manoeuvrable between un unlocked position, in which rotation of the second coupling part 30 in relation to the first coupling part 20 is allowed, and a locking position, in which the second coupling part 30 is prevented from rotating in relation to the first coupling part 20.

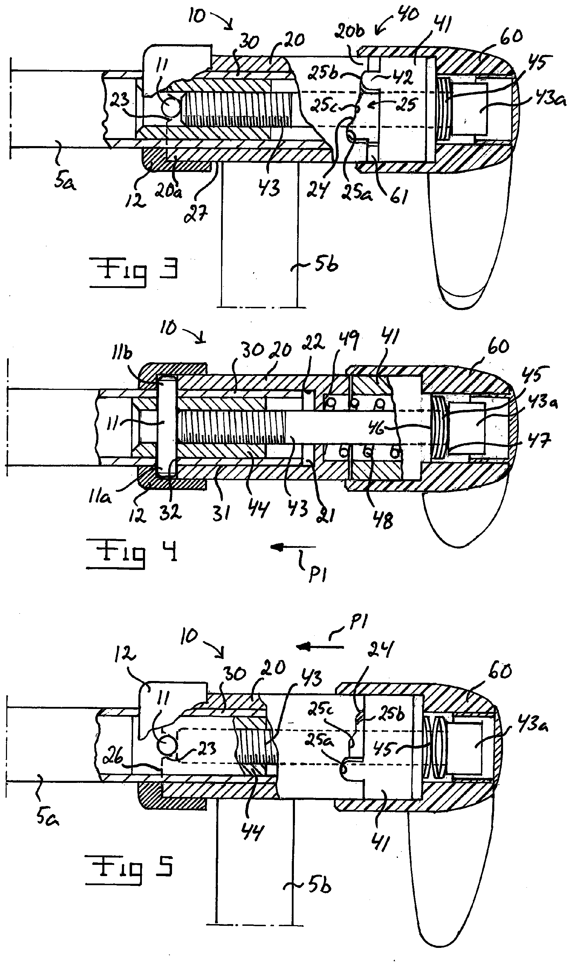

A blocking member 11 is attached to the second coupling part 30 and protrudes radially therefrom. This blocking member is arranged to accompany the second coupling part 30 during rotation and axial displacement thereof. The blocking member 11 suitably has a first protruding section 11a protruding on one side of the second coupling part 30 and a second protruding section 11b protruding on the opposite side of the second coupling part 30, as illustrated in Fig 4. The blocking member 11 suitably consists of a metal pin extending right through the second coupling part 30 through a transverse through hole 32 in the second coupling part. The blocking member 11 is at its protruding sections 11a, 11b arranged to be received in a transverse groove 23 in an inwardly facing first end 20a of the first coupling part 20 when the upper crank rod part 5a is in its unfolded use position.

In this description and the subsequent claims, the expression "inwards" refers to a direction according to the arrow P1 in Figs 3-6, i.e. to the left in these figures, whereas the expression "outwards" consequently refers to the opposite direction, i.e. to the right in Figs 3-6.

In the illustrated example, the groove 23 extends right across the second coupling part 20 and is formed by two essentially semicircular recesses arranged opposite each other in the inwardly facing edge 26 of the first coupling part 20. The groove 23 and the blocking member 11 define a predetermined mutual pivotal position between the first coupling part 20 and the second coupling part 30 and thereby also a predetermined mutual pivotal position between the upper crank rod part 5a and the lower crank rod part 5b. The blocking member 11 and the groove 23 are arranged in such a manner in the two coupling parts 20, 30 that the blocking member 11 is positioned right in front of the groove 23 when the upper crank rod part 5a is in its unfolded use position. When the upper crank rod part 5a is pivoted from its unfolded use position in the direction towards its folded position, the blocking member 11 will be pivoted together with the second coupling part 30 and slide out of the groove 23 and further on along the adjacent edge 26 of the first coupling part 20.

The crank 2 is with advantage provided with a cover sleeve 12, which is fastened to the outside of the second coupling part 30 and extends over the end 20a of the first coupling part facing the blocking member 11 while covering the groove 23 and the sections 11a, 11b of the blocking member 11 protruding from the second coupling part 30, as illustrated in Figs 3-6. The cover sleeve 12 slidably abuts against the outer mantle surface 27 of the first coupling part 20. The cover sleeve 12 is fixed to the second coupling part 30 and consequently immobile in relation to the second coupling part.

The locking mechanism 40 is by means of a manoeuvring member 60 manoeuvrable from its unlocked position to its locking position and vice versa when the upper crank rod part 5a is in its unfolded use position with the blocking member 11 received in the groove 23. The locking mechanism 40 is arranged to prevent, in its locking position, mutual axial displacement between the second coupling part 30 and the first coupling part 20 so that the blocking member 11 thereby will be retained in the groove 23 while preventing mutual rotation between the two coupling parts 20, 30. The locking mechanism 40 is further arranged to allow, in its unlocked position, mutual axial displacement between the second coupling part 30 and the first coupling part 20 so that the blocking member 11 thereby is allowed to leave the groove 23 while allowing mutual rotation between the two coupling parts 20, 30.

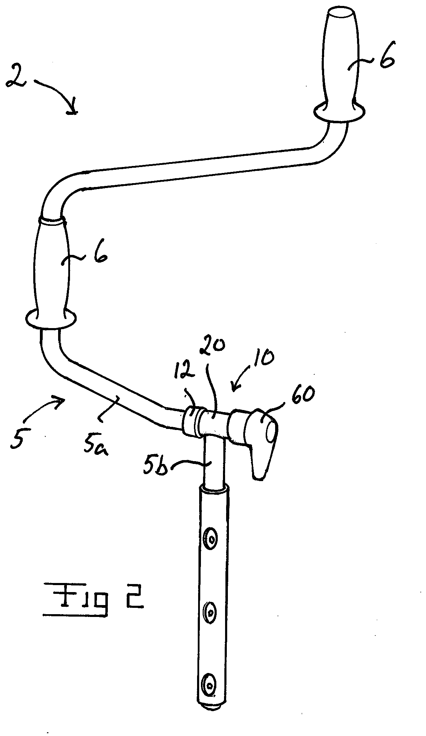

The manoeuvring member 60 has with advantage the form of a handle, as illustrated in Figs 1-7, but could alternatively comprise a knob or the similar.

The first coupling part 20 is provided with an outwardly facing guiding cam 24 at its end 20b facing away from the blocking member 11, which guiding cam extends along the outwardly facing edge of the first coupling part 20. The locking mechanism 40 comprises a locking member 41 connected in a rotationally rigid manner to the manoeuvring member 60, which locking member is pivotable in relation to the first coupling part 20 and arranged to abut against the guiding cam 24. The locking member 41 is mounted in a cavity 61 in the manoeuvring member 60 and may for instance be secured in this cavity by press fit. The locking member 41 is arranged to assume a first pivotal position in relation to the first coupling part 20 when the locking mechanism is in the unlocked position (see Fig 5) and a second pivotal position in relation to the first coupling part 20 when the locking mechanism is in the locking position (see Fig 3). The locking member 41 is pivotable by means of the manoeuvring member 60 to and fro between said first and second pivotal positions and is arranged to be displaced in axial direction outwards in relation to the first coupling part 20 under the effect of the guiding cam 24 when pivoting from the first pivotal position to the second pivotal position and in axial direction inwards in relation to the first coupling part 20 under the effect of the guiding cam 24 when pivoting from the second pivotal position to the first pivotal position. The locking member 41 is arranged to pivot about its longitudinal axis, which coincides with the longitudinal axis of the first coupling part.

In the illustrated example, the locking member 41 is sleeve-shaped and is at its end facing the guiding cam 24 provided with three rounded and axially protruding protrusions 42, which are uniformly distributed in the circumferential direction of the locking member. The guiding cam 24 comprises, in its turn, three identically shaped guiding cam sections 25 uniformly distributed in the circumferential direction of the first coupling part, the respective guiding cam section 25 being arranged to co-operate with one of said protrusions 42 of the locking member 41. The protrusions 42 and the guiding cam sections 25 could also be more or fewer than three, such as for instance two or four. The respective guiding cam section 25 comprises at least a lower plateau 25a and an upper plateau 25b located on mutually different levels as seen in the longitudinal direction of the first coupling part. The respective protrusion 42 is arranged to abut against the lower plateau 25a of the associated guiding cam section when the locking member 41 is in the above-mentioned first pivotal position, as illustrated in Fig 5, and against the upper plateau 25b when the locking member 41 is in the above-mentioned second pivotal position, as illustrated in Fig 3. In the illustrated example, there is also an intermediate plateau 25c between the lower plateau and the upper plateau of the respective guiding cam section, the respective protrusion 42 passing the intermediate plateau 25c of the associated guiding cam section when the locking member 41 is pivoted in relation to the first coupling part 20 between said first and second pivotal positions. When the locking member 41 by means of the manoeuvring member 60 is pivoted from the first pivotal position in the direction towards the second pivotal position, the respective protrusion 42 will move along the associated guiding cam section 25 from the lower plateau 25a, up to the intermediate plateau 25c and then further up to the upper plateau 25b, and the locking member 41 will be displaced outwards in relation to the first coupling part 20. When the locking member 41 is pivoted from the second pivotal position in the direction towards the first pivotal position, the respective protrusion 42 will move along the associated guiding cam section 25 from the upper plateau 25b, down to the intermediate plateau 25c and then further down to the lower plateau 25a, and the locking member 41 will be displaced inwards in relation to the first coupling part 20.

Between each pair of adjacent guiding cam sections 25, the guiding cam 24 is provided with an axially protruding protrusion which prevents the protrusions 42 of the locking member from being displaced in the circumferential direction of the locking member out of engagement with its respective guiding cam section. These protrusions of the guiding cam 24 consequently limit the pivotal movements of the locking member 41 in relation to the first coupling part 20 and ensure that the locking member 41 is only pivotable in relation to the first coupling part 20 to and fro between said first and second pivotal positions.

The locking member 41 is connected to the second coupling part 30 through a connecting element 43 extending between the locking member 41 and the second coupling part 30, in such a manner that the second coupling part 30 is axially displaceable in relation to the first coupling part 20 when the locking member 41 is in the first pivotal position and prevented from being displaced axially in relation to the first coupling part 20 when the locking member 41 is in the second pivotal position. In the illustrated example, the connecting element 43 is axially displaceable in relation to the locking member 41 and fixed in axial position in relation to the second coupling part 30. In the illustrated example, the locking member 41 is pivotally mounted to the connecting element 43, and the manoeuvring member 60 is pivotable together with the locking member 41 about the connecting element 43.

In the illustrated example, the connecting element 43 consists of a screw, which extends through the manoeuvring member 60 and the locking member 41 and is screwed into a threaded fastening element 44, which is fixed to the second coupling part 30. The fastening element 44 is arranged inside the second coupling part 30 and is fixed to the second coupling part by means of the blocking member 11, which extends through a transverse through hole in the fastening element 44.

A spring member 45 is arranged between a shoulder 46 of the locking member 41 and a shoulder 47 of the connecting element 43 in such a manner that the connecting element 43 against the action of this spring member 45 is axially displaceable inwards together with the second coupling part 30 when the locking member 41 is in the first pivotal position. In the illustrated example, the last-mentioned shoulder 47 is formed by a head 43a of the connecting element. The spring member 45 is with advantage formed by two or more cup springs piled on each other. The locking member 41 is arranged to compress the spring member 45 essentially to its end position when pivoting from the first pivotal position to the second pivotal position, and the locking member 41 is arranged to retain the spring member 45 in its compressed state when located in the second pivotal position (see Fig 3) so as to thereby prevent the connecting element 43 and consequently the second coupling part 30 from being displaced axially in relation to the first coupling part 20.

In order to facilitate a pivoting of the locking member 41 from the first pivotal position to the second pivotal position, a compression spring 48, for instance in the form of a screw spring, is clamped between a shoulder 49 of the first coupling part 20 facing the locking member 41 and a shoulder of the locking member 41 facing the first coupling part.

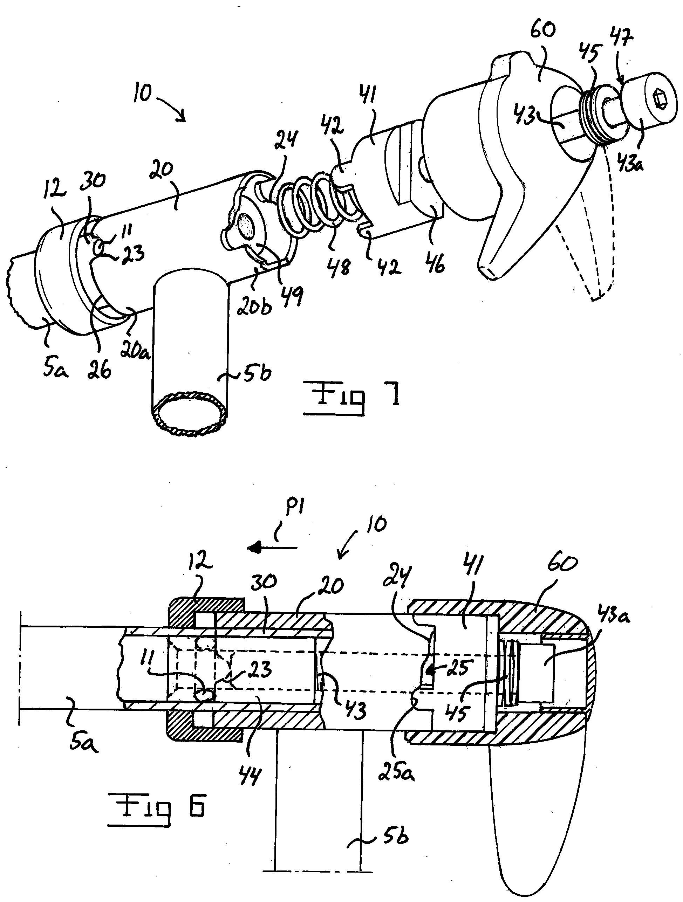

When the upper crank rod part 5a is in its folded position illustrated in Fig 1b, the manoeuvring member 60 and the locking member 41 are in such a pivotal position that the protrusions 42 of the locking member 41 abut against the lower plateaus 25a of the guiding cam sections 25, as illustrated in Fig 6. This pivotal position of the manoeuvring member 60 is indicated with broken lines in Fig 7. At this stage, the blocking member 11 is out of engagement with the groove 23 and abuts under the action of the spring member 45 against the inwardly facing edge 26 of the first coupling part 20 at the side of the groove 23. In this state of the coupling device 10, the second coupling part 30 is together with the blocking member 11, the fastening element 44 and the connecting element 43 pivotable in relation to the first coupling part 20 and the locking member 41. When the upper crank rod part 5a is pivoted to its unfolded use position, the second coupling part 30 will be pivoted in relation to the first coupling part 20 into such a position that the blocking member 11 will arrive right in front of the groove 23, and the blocking member 11 will then be pulled into the groove 23 under the action of the spring member 45 and thereby counteract further pivoting of the second coupling part 30 in relation to the first coupling part 20. The spring force from the spring member 45 is transferred to the blocking member 11 through the connecting element 43 and the fastening element 44. The upper crank rod part 5a may now be locked in its unfolded use position by a pivoting of the manoeuvring member 60 from the position indicated with broken lines in Fig 7 to the position indicated with solid lines in Fig 7. During this pivoting of the manoeuvring member 60, the locking member 41 will be pivoted in relation to the first coupling part 20 from the pivotal position shown in Fig 5 to the pivotal position shown in Fig 3, and the locking member 41 will under the effect of the guiding cam 24 be displaced outwards and compress the spring member 45 to an essentially maximum extent, i.e. to such an extent that no appreciable further compression of the spring member 45 is allowed when the locking member 41 has assumed the last-mentioned pivotal position. In this compressed state of the spring member 45, the head 43a of the connecting element is prevented from being displaced inwards and a displacement inwards of the blocking member 11 and the second coupling part 30 is thereby also prevented at the same time as the blocking member 11 prevents an axial displacement outwards of the second coupling part 30 and the connecting element 43. Hereby, a fixing of the two coupling parts 20, 30 in relation to each other is consequently achieved and thereby also a fixing of the upper crank rod part 5a in relation to the lower crank rod part 5b.

When the user thereafter wants to pivot the upper crank rod part 5a from the unfolded use position illustrated in Fig 1a to the folded position illustrated in Fig 1b, the user pivots the manoeuvring member 60 from the position indicated with solid lines in Fig 7 to the position indicated with broken lines in Fig 7. During this pivoting of the manoeuvring member 60, the locking member 41 will be pivoted in relation to the first coupling part 20 from the pivotal position shown in Fig 3 to the pivotal position shown in Fig 5, and the locking member 41 will under the effect of the spring member 45 and the guiding cam 24 be displaced inwards, while an expansion of the spring member 45 takes place. In this expanded state of the spring member 45, the head 43a of the connecting element is capable of being displaced inwards against the action of the spring member 45, i.e. while compressing the spring member, and a displacement inwards of the blocking member 11 and the second coupling part 30 is thereby also allowed. When the user now pivots the upper crank rod part 5a in relation to the lower crank rod part 5b and consequently pivots the second coupling part 30 in relation to the first coupling part 20, the blocking member 11 will be displaced along the rear edge 26 of the first coupling part 20 and slide out of the groove 23 and the blocking member 11 will together with the second coupling part 30, the fastening element 44 and the connecting element 43 be displaced inwards against the action of the spring member 45.

The invention is of course not in any way limited to the embodiments described above. On the contrary, several possibilities to modifications thereof should be apparent to a person skilled in the art without thereby deviating from the basic idea of the invention as defined in the appended claims.

## Claims

1. A crank for an ice drill, which crank (2) comprises a crank rod (5) with an upper crank rod part (5a) and a lower crank rod part (5b), and a coupling device (10), which is arranged to pivotally connect the upper crank rod part (5a) to the lower crank rod part (5b) so as to allow the upper crank rod part (5a) to be pivoted in relation to the lower crank rod part (5b) through the coupling device (10) between an unfolded use position and a folded transport and storage position, the coupling device (10) comprising:
- a sleeve-shaped first coupling part (20), which is fixedly connected to the lower crank rod part (5b) and arranged with its longitudinal axis perpendicularly or at least essentially perpendicularly to the longitudinal axis of the lower crank rod part;
- a second coupling part (30), which is fixedly connected to the upper crank rod part (5a) and rotatably received in the first coupling part (20); and
- a locking mechanism (40), which is manoeuvrable between an unlocked position, in which rotation of the second coupling part (30) in relation to the first coupling part (20) is allowed, and a locking position, in which the second coupling part (30) is prevented from being rotated in relation to the first coupling part (20),
**characterized in:**
- **that** the coupling device (10) comprises a blocking member (11) attached to the second coupling part (30) and protruding radially therefrom, which blocking member is arranged to accompany the second coupling part (30) during rotation and axial displacement thereof, this blocking member (11) being arranged to be received in a groove (23) in a first end of the first coupling part (20) when the upper crank rod part (5a) is in said unfolded use position; and
- **that** the locking mechanism (40) by means of a manoeuvring member (60) is manoeuvrable from its unlocked position to its locking position and vice verse when the upper crank rod part (5a) is in the unfolded use position with said blocking member (11) received in said groove (23), the locking mechanism (40) being arranged to prevent, in its locking position, mutual axial displacement between the second coupling part (30) and the first coupling part (20) so that the blocking member (11) thereby will be retained in said groove (23) while preventing mutual rotation between said coupling parts (20, 30), and arranged to allow, in its unlocked position, mutual axial displacement between the second coupling part (30) and the first coupling part (20) so that the blocking member (11) thereby is allowed to leave said groove (23) while allowing mutual rotation between said coupling parts (20, 30).

2. A crank according to claim 1, **characterized in that** the second coupling part (30) is received in a cavity (21) in the first coupling part, and that the second coupling part (30) has a circularly cylindrical mantle surface (31) which slidably abuts against a circularly cylindrical internal wall surface (22) of said cavity (21).

3. A crank according to claim 1 or 2, **characterized in that** the blocking member (11) has a first protruding section (11a) protruding on one side of the second coupling part (30) and a second protruding section (11b) protruding on the opposite side of the second coupling part (30).

4. A crank according to claim 3, **characterized in that** the blocking member (11) consists of a metal pin extending right through the second coupling part (30).

5. A crank according to claim 3 or 4, **characterized in that** the crank (2) comprises a cover sleeve (20) fastened to the outside of the second coupling part (30) and extending over the end of the first coupling part (20) facing the blocking member (11) while covering said protruding sections (11a, 11b) of the blocking member (11).

6. A crank according to any of claims 1-5, **characterized in:**
- **that** the first coupling part (20) at its second end, which is facing away from the blocking member (11), is provided with an outwardly facing guiding cam (24);
- **that** the locking mechanism (40) comprises a locking member (41) connected to the manoeuvring member (60) in a rotationally rigid manner, which locking member is pivotable in relation to the first coupling part (20) and arranged to abut against said guiding cam (24);
- **that** the locking member (41) is arranged to assume a first pivotal position in relation to the first coupling part (20) when the locking mechanism is in the unlocked position and a second pivotal position in relation to the first coupling part (20) when the locking mechanism is in the locking position, the locking member (41) being pivotable by means of the manoeuvring member (60) to and fro between said first and said second pivotal positions and being arranged to be displaced in axial direction outwards in relation to the first coupling part (20) under the effect of said guiding cam (24) when pivoting from said first pivotal position to said second pivotal position; and
- **that** the locking member (41) is connected to the second coupling part (30) through a connecting element (43) extending between the locking member (41) and the second coupling part (30), in such a manner that the second coupling part (30) is axially displaceable in relation to the first coupling part (20) when the locking member (41) is in the first pivotal position and prevented from being displaced axially in relation to the first coupling part (20) when the locking member (41) is in the second pivotal position.

7. A crank according to claim 6, **characterized in that** the connecting element (43) is axially displaceable in relation to the locking member (41) and fixed in axial position in relation to the second coupling part (30).

8. A crank according to claim 7, **characterized in that** a spring member (45) is arranged between a shoulder (46) of the locking member (41) and a shoulder (47) of the connecting element (43), the connecting element (43) being axially displaceable inwards together with the second coupling part (30) against the action of this spring member (45) when the locking member (41) is in the first pivotal position.

9. A crank according to claim 8, **characterized in that** the locking member (41) is arranged to compress the spring member (45) essentially to its end position when pivoting from the first pivotal position to the second pivotal position, the locking member (41) being arranged, when in the second pivotal position, to retain the spring member (45) in its compressed state so as to thereby prevent the second coupling part (30) from being displaced in relation to the first coupling part (20).

10. A crank according to claim 8 or 9, **characterized in that** the spring member (45) is formed by two or more cup springs piled on each other.

11. A crank according to any of claims 7-10, **characterized in that** the connecting element (43) consists of a screw, which extends through the locking member (41) and is screwed into a threaded fastening element (44), which is fixed to the second coupling part (30).

12. A crank according to claim 11, **characterized in that** the fastening element (44) is arranged inside the second coupling part (30) and is fixed thereto by means of the blocking member (11), which extends through a transverse through hole in the fastening element (44).

13. A crank according to any of claims 6-12, **characterized in:**
- **that** the locking member (41) is mounted in a cavity (61) in the manoeuvring member (60); and
- **that** the locking member (41) is pivotally mounted to the connecting element (43), the manoeuvring member (60) being pivotable together with the locking member (41) about the connecting element (43).

14. A crank according to any of claims 1-13, **characterized in that** the manoeuvring member (60) consists of a handle.

15. An ice drill comprising a drill rod (3) and a bore crown (7) arranged at the lower end of the drill rod, the bore crown having one or several cutting blades (8) fixed thereto, **characterized in that** the ice drill (1) comprises a crank (2) according to any of claims 1-14, the lower crank rod part (5b) of this crank (2) being connected or connectable to the drill rod (3).

## Patentansprüche

1. Kurbel für einen Eisbohrer, wobei die Kurbel (2) eine Kurbelstange (5) mit einem oberen Kurbelstangenteil (5a) und einem unteren Kurbelstangenteil (5b) und eine Kupplungseinrichtung (10) umfasst, die eingerichtet ist, um den oberen Kurbelstangenteil (5a) mit dem unteren Kurbelstangenteil (5b) schwenkbar zu verbinden, so dass dem obere Kurbelstangenteil (5a) durch die Kupplungseinrichtung (10) ermöglicht ist, in Bezug zu dem unterem Kurbelstangenteil (5b) zwischen einer entfalteten Gebrauchsstellung und einer gefalteten Transport- und Aufbewahrungsstellung geschwenkt zu werden, wobei die Kopplungsvorrichtung (10) umfasst:
- ein hülsenförmiges erstes Kupplungsteil (20), das mit dem unteren Kurbelstangenteil (5b) fest verbunden ist und mit seiner Längsachse senkrecht oder zumindest im Wesentlichen senkrecht zur Längsachse des unteren Kurbelstangenteils angeordnet ist;
- ein zweites Kupplungsteil (30), das mit dem oberen Kurbelstangenteil (5a) fest verbunden und im ersten Kupplungsteil (20) drehbar aufgenommen ist; und
- einen Verriegelungsmechanismus (40), der manövrierbar ist zwischen einer entriegelten Stellung, in der eine Drehung des zweiten Kupplungsteils (30) in Bezug zu dem ersten Kupplungsteil (20) möglich ist, und einer verriegelten Stellung, in der das zweite Kupplungsteil (30) in Bezug zu dem ersten Kupplungsteil (20) daran gehindert ist, gedreht zu werden,
**dadurch gekennzeichnet, dass**:
- dass die Kopplungseinrichtung (10) ein an dem zweiten Kupplungsteil (30) befestigtes und radial davon vorstehendes Sperrglied (11) umfasst, wobei das Sperrglied (11) angeordnet ist, um das zweite Kupplungsteil (30) während der Drehung und dessen axialer Verschiebung zu begleitet, wobei dieses Sperrglied (11) angeordnet ist, um in einer Nut (23) in einem ersten Ende des ersten Kupplungsteils (20) aufgenommen zu werden, wenn sich das obere Kurbelstangenteil (5a) in der entfalteten Gebrauchsstellung befindet; und
- dass der Verriegelungsmechanismus (40) mittels eines Manövrierglieds (60) aus seiner entriegelten Stellung in seine verriegelte Stellung und umgekehrt manövrierbar ist, wenn das obere Kurbelstangenteil (5a) in der entfalteten Gebrauchsstellung mit dem Sperrglied (11) in der Nut (23) aufgenommen ist, wobei der Verriegelungsmechanismus (40) eingerichtet ist, um in seiner verriegelten Stellung eine gegenseitige axiale Verschiebung zwischen dem zweiten Kupplungsteil (30) und dem ersten Kupplungsteil (20) zu verhindert, so dass das Sperrglied (11) in der Nut (23) gehalten wird, während eine gegenseitige Drehung zwischen den Kupplungsteilen (20, 30) verhindert wird, und eingerichtet ist, um in ihrer entriegelten Stellung eine gegenseitige axiale Verschiebung zwischen dem zweiten Kupplungsteil (30) und dem Ersten Kupplungsteil (20) zu ermöglichen, so dass dem Sperrglied (11) dadurch ermöglicht wird die Nut (23) zu verlassen, während eine gegenseitige Drehung zwischen den Kupplungsteilen (20, 30) ermöglicht wird.

2. Kurbel nach Anspruch 1, **dadurch gekennzeichnet, dass** das zweite Kupplungsteil (30) in einem Hohlraum (21) des ersten Kupplungsteils aufgenommen ist und dass das zweite Kupplungsteil (30) eine kreisringförmige Mantelfläche (31) hat, die gleitbar an einer kreiszylindrischen Innenwandfläche (22) des Hohlraums (21) anliegt.

3. Kurbel nach Anspruch 1 oder 2, **dadurch gekennzeichnet, dass** das Sperrglied (11) einen ersten vorspringenden Abschnitt (11a) aufweist, der auf einer Seite des zweiten Kupplungsteils (30) vorsteht und ein zweiter vorstehender Abschnitt (11b), der auf der gegenüberliegenden Seite des zweiten Kupplungsteils (30) vorsteht.

4. Kurbel nach Anspruch 3, **dadurch gekennzeichnet, dass** das Sperrglied (11) aus einem Metallstift besteht, der sich durch das zweite Kupplungsteil (30) erstreckt.

5. Kurbel nach Anspruch 3 oder 4, **dadurch gekennzeichnet, dass** die Kurbel (2) eine Abdeckhülse (20) umfasst, die an der Außenseite des zweiten Kupplungsteils (30) befestigt ist und sich über das Ende des ersten Kupplungsteils (20) erstreckt, wobei sie dem Sperrglied (11) zugewandt ist, während sie die vorstehenden Abschnitte (11a, 11b) des Sperrglieds (11) abdeckt.

6. Kurbel nach einem der Ansprüche 1-5, **dadurch gekennzeichnet,**
- **dass** das erste Kupplungsteil (20) an seinem zweiten Ende, das von dem Sperrglied (11) abgewandt ist, mit einem nach außen weisenden Führungsnocken (24) versehen ist;
- **dass** der Verriegelungsmechanismus (40) ein Verriegelungsglied (41) umfasst, das mit dem Manövrierglied (60) in einer drehfesten Weise verbunden ist, wobei das Verriegelungsglied schwenkbar in Bezug zu dem ersten Kupplungsteil (20) und eingerichtet ist, um an dem Führungsnocken (24) anzuliegen;
- **dass** das Verriegelungsglied (41) eingerichtet ist, um eine erste Schwenkstellung in Bezug zu dem ersten Kupplungsteil (20) einzunehmen, wenn sich der Verriegelungsmechanismus in der entriegelten Stellung befindet, und eine zweite Schwenkstellung in Bezug zu dem ersten Kupplungsteil (20), wenn sich der Verriegelungsmechanismus in der Verriegelungsstellung befindet, wobei das Verriegelungsglied (41) mittels des Manövrierglieds (60) zwischen der ersten und der zweiten Schwenkstellung hin und her schwenkbar ist und eingerichtet ist, um in axialer Richtung nach außen in Bezug zu dem ersten Kupplungsteil (20) unter der Wirkung des Führungsnockens (24) verschoben zu werden, wenn es von der ersten Schwenkstellung in die zweite Schwenkstellung geschwenkt wird; und
- **dass** das Verriegelungselement (41) mit dem zweiten Kupplungsteil (30) über ein zwischen dem Verriegelungsglied (41) und dem zweiten Kupplungsteil (30) verlaufendes Verbindungselement (43) in der Weise verbunden ist, dass das zweite Kupplungsteil (30) in Bezug zu dem ersten Kupplungsteil (20) axial verschiebbar ist, wenn sich das Verriegelungsglied (41) in der ersten Schwenkstellung befindet und daran gehindert ist, axial zu dem ersten Kupplungsteil (20) verschoben zu werden, wenn sich das Verriegelungsglied (41) in der zweiten Schwenkstellung befindet.

7. Kurbel nach Anspruch 6, **dadurch gekennzeichnet, dass** das Verbindungselement (43) in Bezug zu dem Verriegelungsglied (41) axial verschiebbar und in axialer Stellung in Bezug zu dem zweiten Kupplungsteil (30) fixiert ist.

8. Kurbel nach Anspruch 7, **dadurch gekennzeichnet, dass** zwischen einer Schulter (46) des Verriegelungsgliedes (41) und einer Schulter (47) des Verbindungselements (43) ein Federelement (45) angeordnet ist, wobei das Verbindungselement (43) zusammen mit dem zweiten Kupplungsteil (30) gegen die Wirkung dieses Federelementes (45) axial nach innen verschiebbar ist, wenn sich das Verriegelungsglied (41) in der ersten Schwenkstellung befindet.

9. Kurbel nach Anspruch 8, **dadurch gekennzeichnet, dass** das Verriegelungsglied (41) eingerichtet ist, um das Federelement (45) im Wesentlichen in seine Endstellung beim Schwenken von der ersten Schwenkstellung in die zweite Schwenkstellung zu komprimieren, wobei das Verriegelungsglied (41) in der zweiten Schwenkstellung eingerichtet ist, um das Federelement (45) in seinem komprimierten Zustand zu halten, um dadurch zu verhindern, dass das zweite Kupplungsteil (30) in Bezug zu dem ersten Kupplungsteil (20) verschoben wird.

10. Kurbel nach Anspruch 8 oder 9, **dadurch gekennzeichnet, dass** das Federelement (45) durch zwei oder mehrere aufeinander gestapelte Tellerfedern gebildet ist.

11. Kurbel nach einem der Ansprüche 7-10, **dadurch gekennzeichnet, dass** das Verbindungselement (43) aus einer Schraube besteht, die sich durch das Verriegelungsglied (41) erstreckt und in ein mit Gewinde versehenes Befestigungselement (44) eingeschraubt ist, das an dem zweiten Kupplungsteil (30) befestigt ist.

12. Kurbel nach Anspruch 11, **dadurch gekennzeichnet, dass** das Befestigungselement (44) innerhalb des zweiten Kupplungsteils (30) angeordnet ist und mittels des Sperrgliedes (11) dort fixiert ist, das sich durch ein quergerichtetes Durchgangsloch in dem Befestigungselement (44) erstreckt.

13. Kurbel nach einem der Ansprüche 6-12, **dadurch gekennzeichnet,**
- **dass** das Verriegelungsglied (41) in einem Hohlraum (61) in dem Manövrierglied (60) angebracht ist; und
- **dass** das Verriegelungsglied (41) schwenkbar am Verbindungselement (43) angebracht ist, wobei das Manövrierglied (60) zusammen mit dem Verriegelungsglied (41) um das Verbindungselement (43) schwenkbar ist.

14. Kurbel nach einem der Ansprüche 1-13, **dadurch gekennzeichnet, dass** das Manövrierglied (60) aus einem Griff besteht.

15. Eisbohrer mit einer Bohrstange (3) und einer am unteren Ende der Bohrstange angeordneten Bohrkrone (7), wobei die Bohrkrone eine oder mehrere daran befestigte Schneidklingen (8) aufweist, **dadurch gekennzeichnet, dass** der Eisbohrer (1) eine Kurbel (2) nach einem der Ansprüche 1-14 aufweist, wobei das untere Kurbelstangenteil (5b) dieser Kurbel (2) mit der Bohrstange (3) verbunden oder verbindbar ist.

## Revendications

1. Manivelle pour une tarière à glace, laquelle manivelle (2) comprend une bielle de manivelle (5) avec une partie supérieure de bielle de manivelle (5a) et une partie inférieure de bielle de manivelle (5b), et un dispositif d'accouplement (10), qui est agencé de sorte à relier de manière pivotante la partie supérieure de bielle de manivelle (5a) à la partie inférieure de bielle de manivelle (5b) de sorte à permettre à la partie supérieure de bielle de manivelle (5a) de pivoter par rapport à la partie inférieure de bielle de manivelle (5b) par l'intermédiaire du dispositif d'accouplement (10) entre une position d'utilisation dépliée et une position de transport et de stockage pliée, le dispositif d'accouplement (10) comprenant :
- une première partie d'accouplement en forme de manchon (20), qui est reliée de manière fixe à la partie inférieure de bielle de manivelle (5b) et agencée avec son axe longitudinal perpendiculairement ou au moins sensiblement perpendiculairement à l'axe longitudinal de la partie inférieure de bielle de manivelle ;
- une seconde partie d'accouplement (30), qui est reliée de manière fixe à la partie supérieure de bielle de manivelle (5a) et accueillie de manière rotative dans la première partie d'accouplement (20) ; et
- un mécanisme de verrouillage (40), qui est actionnable entre une position déverrouillée, dans laquelle la rotation de la seconde partie d'accouplement (30) par rapport à la première partie d'accouplement (20) est permise, et une position de verrouillage, dans laquelle la seconde partie d'accouplement (30) est empêchée d'être entraînée en rotation par rapport à la première partie d'accouplement (20),
**caractérisée en ce :**
- **que** le dispositif d'accouplement (10) comprend un élément de blocage (11) fixé à la seconde partie d'accouplement (30) et faisant saillie radialement à partir de celle-ci, lequel élément de blocage est agencé de sorte à accompagner la seconde partie d'accouplement (30) pendant une rotation et un déplacement axial de celle-ci, cet élément de blocage (11) étant agencé de sorte à être reçu dans une rainure (23) dans une première extrémité de la première partie d'accouplement (20) lorsque la partie supérieure de bielle de manivelle (5a) est dans ladite position d'utilisation dépliée ; et
- **que** le mécanisme de verrouillage (40) au moyen d'un élément d'actionnement (60) est actionnable à partir de sa position déverrouillée vers sa position de verrouillage et vice versa lorsque la partie supérieure de bielle de manivelle (5a) est dans la position d'utilisation dépliée avec ledit élément de blocage (11) reçu dans ladite rainure (23), le mécanisme de verrouillage (40) étant agencé pour empêcher, dans sa position de verrouillage, un déplacement axial mutuel entre la seconde partie d'accouplement (30) et la première partie d'accouplement (20) de sorte que l'élément de blocage (11) sera ainsi retenu dans ladite rainure (23) tout en empêchant une rotation mutuelle entre lesdites parties d'accouplement (20, 30), et agencé pour permettre, dans sa position déverrouillée, un déplacement axial mutuel entre la seconde partie d'accouplement (30) et la première partie d'accouplement (20) de sorte que l'élément de blocage (11) puisse ainsi quitter ladite rainure (23) tout en permettant une rotation mutuelle entre lesdites parties d'accouplement (20, 30).

2. Manivelle selon la revendication 1, **caractérisée en ce que** la seconde partie d'accouplement (30) est accueillie dans une cavité (21) dans la première partie d'accouplement, et **en ce que** la seconde partie d'accouplement (30) possède une surface d'enveloppe circulairement cylindrique (31) qui bute de manière coulissante contre une surface de paroi interne circulairement cylindrique (22) de ladite cavité (21).

3. Manivelle selon la revendication 1 ou 2, **caractérisée en ce que** l'élément de blocage (11) possède une première section saillante (11a) faisant saillie sur un côté de la seconde partie d'accouplement (30) et une seconde section saillante (11b) faisant saillie sur le côté opposé de la seconde partie d'accouplement (30).

4. Manivelle selon la revendication 3, **caractérisée en ce que** l'élément de blocage (11) consiste en une broche métallique s'étendant à travers la seconde partie d'accouplement (30).

5. Manivelle selon la revendication 3 ou 4, **caractérisée en ce que** la manivelle (2) comprend un manchon de couverture (20) fixé à l'extérieur de la seconde partie d'accouplement (30) et s'étendant à travers l'extrémité de la première partie d'accouplement (20) orientée face à l'élément de blocage (11) tout en recouvrant lesdites sections saillantes (11a, 11b) de l'élément de blocage (11).

6. Manivelle selon l'une quelconque des revendications 1 à 5, **caractérisée en ce :**
- **que** la première partie d'accouplement (20) au niveau de sa seconde extrémité, qui est orientée à l'opposé de l'élément de blocage (11), est dotée d'une came de guidage orientée vers l'extérieur (24) ;
- **que** le mécanisme de verrouillage (40) comprend un élément de verrouillage (41) relié à l'élément d'actionnement (60) de manière rigide en rotation, lequel élément de verrouillage est apte à pivoter par rapport à la première partie d'accouplement (20) et agencé pour buter contre ladite came de guidage (24) ;
- **que** l'élément de verrouillage (41) est agencé pour assumer une première position de pivotement par rapport à la première partie d'accouplement (20) lorsque le mécanisme de verrouillage est dans la position déverrouillée et une seconde position de pivotement par rapport à la première partie d'accouplement (20) lorsque le mécanisme de verrouillage est dans la position de verrouillage, l'élément de verrouillage (41) étant apte à pivoter au moyen de l'élément d'actionnement (60) vers l'avant et vers l'arrière entre lesdites première et seconde positions de pivotement et étant agencé pour être déplacé vers l'extérieur dans une direction axiale par rapport à la première partie d'accouplement (20) sous l'effet de ladite came de guidage (24) lorsqu'il pivote de ladite première position de pivotement vers ladite seconde position de pivotement ; et
- **que** l'élément de verrouillage (41) est relié à la seconde partie d'accouplement (30) par l'intermédiaire d'un élément de liaison (43) s'étendant entre l'élément de verrouillage (41) et la seconde partie d'accouplement (30), de telle manière que la seconde partie d'accouplement (30) est déplaçable dans un sens axial par rapport à la première partie d'accouplement (20) lorsque l'élément de verrouillage (41) est dans la première position de pivotement et empêchée d'être déplacée dans un sens axial par rapport à la première partie d'accouplement (20) lorsque l'élément de verrouillage (41) est dans la seconde position de pivotement.

7. Manivelle selon la revendication 6, **caractérisée en ce que** l'élément de liaison (43) est déplaçable dans un sens axial par rapport à l'élément de verrouillage (41) et fixe dans une position axiale par rapport à la seconde partie d'accouplement (30).

8. Manivelle selon la revendication 7, **caractérisée en ce qu'**un élément de ressort (45) est agencé entre un épaulement (46) de l'élément de verrouillage (41) et un épaulement (47) de l'élément de liaison (43), l'élément de liaison (43) étant déplaçable vers l'intérieur dans un sens axial avec le second élément d'accouplement (30) contre l'action de cet élément de ressort (45) lorsque l'élément de verrouillage (41) est dans la première position de pivotement.

9. Manivelle selon la revendication 8, **caractérisée en ce que** l'élément de verrouillage (41) est agencé pour comprimer l'élément de ressort (45) sensiblement vers sa position finale lorsqu'il pivote de la première position de pivotement vers la seconde position de pivotement, l'élément de verrouillage (41) étant agencé, lorsqu'il est dans la seconde position de pivotement, pour retenir l'élément de ressort (45) dans un état comprimé de sorte à empêcher ainsi la seconde partie d'accouplement (30) d'être déplacée par rapport à la première partie d'accouplement (20).

10. Manivelle selon la revendication 8 ou 9, **caractérisée en ce que** l'élément de ressort (45) est formé de deux ou plusieurs ressorts Belleville empilés l'un sur l'autre.

11. Manivelle selon l'une quelconque des revendications 7 à 10, **caractérisée en ce que** l'élément de liaison (43) consiste en une vis, qui s'étend à travers l'élément de verrouillage (41) et est vissée dans un élément de fixation fileté (44), qui est fixé à la seconde partie d'accouplement (30).

12. Manivelle selon la revendication 11, **caractérisée en ce que** l'élément de fixation (44) est agencé à l'intérieur de la seconde partie d'accouplement (30) et est fixé à celle-ci au moyen de l'élément de blocage (11), qui s'étend à travers un trou traversant transversal dans l'élément de fixation (44).

13. Manivelle selon l'une quelconque des revendications 6 à 12, **caractérisée en ce :**
- **que** l'élément de verrouillage (41) est monté dans une cavité (61) dans l'élément d'actionnement (60) ; et
- **que** l'élément de verrouillage (41) est monté pivotant sur l'élément de liaison (43), l'élément d'actionnement (60) étant apte à pivoter avec l'élément de verrouillage (41) autour de l'élément de liaison (43).

14. Manivelle selon l'une quelconque des revendications 1 à 13, **caractérisée en ce que** l'élément d'actionnement (60) consiste en une poignée.

15. Tarière à glace comprenant une tige de tarière (3) et une couronne de forage (7) agencée à l'extrémité inférieure de la tige de tarière, la couronne de forage possédant une ou plusieurs lame(s) tranchante(s) (8) fixée(s) à celle-ci, **caractérisée en ce que** la tarière à glace (1) comprend une manivelle (2) selon l'une quelconque des revendications 1 à 14, la partie inférieure de bielle de manivelle (5b) de cette manivelle (2) étant reliée ou pouvant être reliée à la tige de tarière (3).
